Europäisches Patentamt

European Patent Office

Office européen des brevets

(19)

(11) **EP 1 244 243 B1**

(12) **FASCICULE DE BREVET EUROPEEN**

(45) Date de publication et mention
de la délivrance du brevet:
**02.11.2005 Bulletin 2005/44**

(51) Int Cl.[7]: **H04L 5/02**, H04L 27/26

(21) Numéro de dépôt: **02290596.2**

(22) Date de dépôt: **11.03.2002**

(54) **Egalisation à minimisation de l'erreur quadratique moyenne globale**

Entzerrung mit globaler minimierung des mittleren quadratischen Fehlers

Global MMSE equalisation

(84) Etats contractants désignés:
**AT BE CH CY DE DK ES FI FR GB GR IE IT LI LU MC NL PT SE TR**

(30) Priorité: **22.03.2001 FR 0104051**

(43) Date de publication de la demande:
**25.09.2002 Bulletin 2002/39**

(73) Titulaire: **Mitsubishi Electric Information Technology Centre Europe B.V.
1119 NS Schiphol Rijk (NL)**

(72) Inventeurs:
• **Castelain, Damien, Mitsubishi Electric ITE
35700 Rennes (FR)**
• **Mottier, David, Mitsubishi Electric ITE
35700 Rennes (FR)**

(74) Mandataire: **Maillet, Alain
Cabinet le Guen & Maillet,
5, Place Newquay,
B.P. 70250
35802 Dinard Cedex (FR)**

(56) Documents cités:
• **H LARD ET AL.: "Linear MMSE detection technique for MC-CDMA" ELECTRONICS LETTERS, vol. 36, no. 7, 30 mars 2000 (2000-03-30), pages 665-666, XP006015082 Stevenage, GB ISSN: 0013-5194**
• **VOORMAN ET AL: "Performance evaluation of the decorrelating detector for DS-CDMA systems over multipath Rayleigh fading channels with AWGN" IEEE INTERNATIONAL SYMPOSIUM ON PERSONAL, INDOOR AND MOBILE RADIO COMMUNICATIONS, 8 - 11 septembre 1998, pages 228-232, XP002186690 New York, US ISBN: 0-7803-4872-9**
• **MOTTIER, CASTELAIN: "A spreading sequence allocation procedure for MC-CDMA transmission systems" IEEE VEHICULAR TECHNOLOGY CONFERENCE, 24 - 28 septembre 2000, pages 1270-1275 vol.3, XP002186691 Piscataway, US ISBN: 0-7803-6507-0**
• **DAS, ET AL: "Computationally efficient multiuser detectors" IEEE INTERNATIONAL SYMPOSIUM ON PERSONAL, INDOOR AND MOBILE RADIO COMMUNICATIONS, 1 - 4 septembre 1997, pages 62-67, XP002186693 New York, US ISBN: 0-7803-3871-5**

EP 1 244 243 B1

## Description

La présente invention concerne une méthode et un dispositif d'égalisation pour voie descendante d'un système de télécommunication de type MC-CDMA. Plus particulièrement, la présente invention concerne une méthode et un dispositif d'égalisation de type GMMSE.

L'accès multiple à répartition par codes sur porteuses multiples (MC-CDMA pour *Multi-Carrier Code Division Multiple Access*) combine la modulation OFDM (*Orthogonal Frequency Division Multiplex)* et la technique d'accès multiple CDMA. Cette technique d'accès multiple a été proposée pour la première fois par N. Yee et al. dans l'article intitulé « Multicarrier CDMA in indoor wireless radio networks » paru dans Proceedings of PIMRC'93, Vol. 1, pages 109-113, 1993. Les développements de cette technique ont été passés en revue par S. Hara et al. dans l'article intitulé « Overview of multicarrier CDMA » publié dans IEEE Communication Magazine, pages 126-133, Décembre 1997.

Contrairement à la méthode DS-CDMA *(Direct Sequence Code Division Multiple Access)* dans laquelle le signal de chaque utilisateur est multiplié dans le domaine temporel pour étaler son spectre fréquentiel, la signature multiplie ici le signal dans le domaine fréquentiel, chaque élément de la signature multipliant le signal d'une sous-porteuse différente.

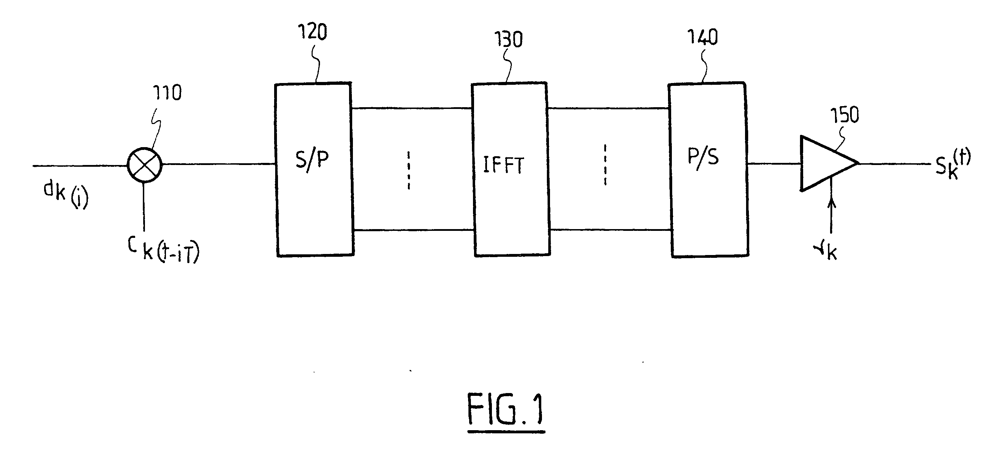

Plus précisément la Fig. 1 représente la structure d'un émetteur MC-CDMA pour un utilisateur $k$ donné. Soit $d_k(i)$ le $i^{\text{ème}}$ symbole à émettre de l'utilisateur $k$ où $d_k(i)$ appartient à l'alphabet de modulation. Le symbole $d_k(i)$ est tout d'abord multiplié en 110 par une séquence d'étalement ou signature de l'utilisateur, notée $c_k(t)$, constituée de $N$ « chips », chaque « chip » étant de durée $T_c$, la durée totale de la séquence d'étalement correspondant à une période symbole $T$. Les résultats de la multiplication du symbole $d_k(i)$ par les différents « chips » sont convertis par le convertisseur série/ parallèle 120 en un bloc de $L$ symboles, où $L$ est en général un multiple de $N$. Nous considèrerons, pour des raisons de simplification de présentation, que $L=N$. Le bloc de $L$ symboles est ensuite soumis à une transformée de Fourier rapide inverse (IFFT) dans le module 130 avant d'être transmis au convertisseur parallèle/ série 140. Afin d'éviter l'interférence inter-symbole, un intervalle de garde, de longueur supérieure à la durée de la réponse impulsionnelle du canal de transmission, est adjoint au symbole MC-CDMA. Cet intervalle est obtenu par l'adjonction (non représentée) d'un suffixe choisi identique au début dudit symbole. Le symbole ainsi obtenu est amplifié en 150 avant d'être transmis sur le canal de l'utilisateur. On voit donc que la méthode MC-CDMA s'analyse en un étalement dans le domaine spectral (avant IFFT) suivi d'une modulation OFDM.

En pratique, l'utilisateur $k$ transmet ses données sous forme de trames de $l$ symboles, chaque symbole $d_k(i)$ étant étalé par une signature réelle $c_k(t)$ de durée égale à la période symbole $T$, telle que $c_k(t)=0$ si $t \notin [0,T[$. Le signal modulé à l'instant $t=i.T+\ell.T_c$ peut alors s'écrire, si l'on omet les intervalles de garde entre symboles MC-CDMA :

$$S_k(t)=\sum_{i=0}^{l-1}\sum_{\ell=0}^{L-1}v_k.c_k(\ell.T_c).d_k(i).\exp(j.2\pi\ell/L) \tag{1}$$

où $v_k$ est l'amplitude du signal transmis par l'utilisateur $k$, supposée constante pour un bloc de transmission.

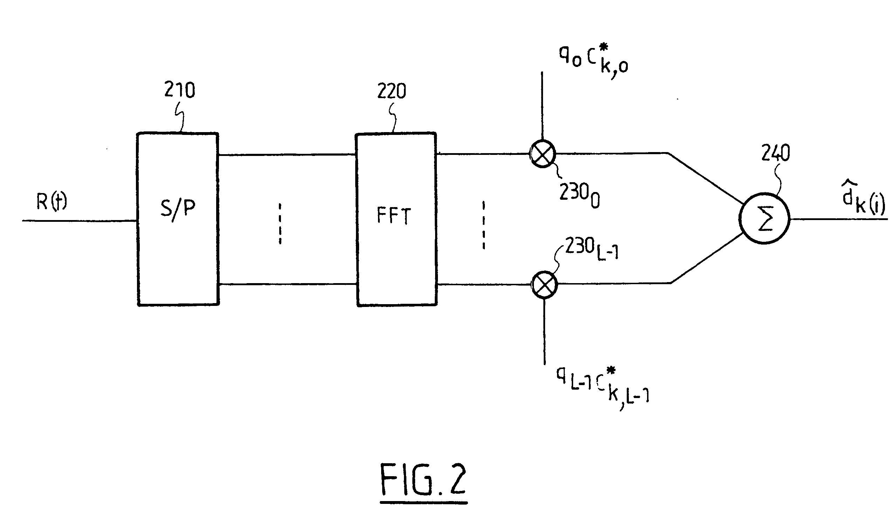

Un récepteur MC-CDMA pour un utilisateur $k$ donné a été illustré schématiquement en Fig. 2.

Le signal reçu démodulé est échantillonné à la fréquence « chip » et les échantillons appartenant à l'intervalle de garde sont supprimés (suppression non représentée). Le signal obtenu peut s'écrire :

$$R(i)=\sum_{k=0}^{K-1}\sum_{i=0}^{l-1}\sum_{\ell=0}^{L-1}h_{k\ell}(i).v_k.c_{k\ell}.d_k(i).\exp(j.2\pi\ell/L)+b(t) \tag{2}$$

où $K$ est le nombre d'utilisateurs, $c_{k\ell}=c_k(\ell.T_c)$, $h_{k\ell}(i)$ traduit la réponse du canal de l'utilisateur $k$ à la fréquence de la sous-porteuse du symbole MC-CDMA émis au temps $i.T$ et où $b(t)$ est le bruit reçu.

Si l'on considère la voie descendante, les canaux de transmission ont des caractéristiques identiques et l'on peut écrire $h_{k\ell}=h_\ell$. On se limitera par la suite à l'étude de la voie descendante.

Les échantillons obtenus par échantillonnage à la fréquence « chip » sont parallélisés dans un convertisseur série/ parallèle 210 avant de subir une FFT dans le module 220. Les échantillons dans le domaine fréquentiel, en sortie de 220, sont égalisés et désétalés par la signature de l'utilisateur $k$. Pour ce faire, les échantillons du domaine fréquentiel sont multipliés par les coefficients $q_\ell.c_{k\ell}^{*}$ dans les multiplieurs $230_0,..,230_{L-1}$, puis sommés en 240 pour fournir en sortie un symbole estimé $d_k(i)$.

2

Différentes possibilités d'égalisation ont été envisagées dans l'état de la technique :

- la combinaison MRC (*Maximum Ratio Combining)* définie par l'emploi des coefficients $q_\ell = h_\ell^*$ où.* est l'opération de conjugaison;
- la combinaison EGC (*Equal Gain Combining)* définie par l'emploi des coefficients $q_\ell = e^{-j\varphi\ell}$ où $h_\ell = \rho_\ell.e^{j\varphi\ell}$;
- le forçage à zéro ZF *(Zero Forcing)* où $q_\ell = h_\ell^{-1}(i)$;
- le forçage à zéro ZF avec seuil (*Th*) où $q_\ell = h_\ell^{-1}(i)$ si $|h_\ell(i)| < Th$ et $q_\ell = 0$(ou $q_\ell = e^{-j\varphi\ell}$) sinon ;
- l'algorithme de minimisation de l'erreur quadratique moyenne MMSE *(Minimum Mean Square Error)* sur chacune des porteuses :

$$q_\ell = \frac{h_\ell^*}{|h_\ell|^2 + \sigma^2}$$

où $\sigma^2$ est la variance du bruit sur la porteuse.

On rappelle qu'en MC-CDMA, la présence d'une période de garde permet de négliger l'interférence inter-symbole. L'égalisation peut être donc réalisée au moyen d'une simple multiplication par un coefficient complexe, porteuse par porteuse.

Le récepteur illustré en Fig. 2 décode les données d'un utilisateur *k* sans prendre en compte l'interférence due aux autres utilisateurs. Il est dénommé pour cette raison mono-utilisateur ou SU *(Single User).*

Les techniques de détection multi-utilisateur sont connues notamment dans les systèmes de télécommunication CDMA. Elles ont pour caractéristique commune de prendre en compte les interférences générées par les autres utilisateurs.

Une technique de détection multi-utilisateur ou MUD (*Multi User Detection*) pour MC-CDMA a été présentée dans l'article de J-Y. Beaudais, J.F. Hélard et J. Citerne intitulé « Linear MMSE detection technique for MC-CDMA » publié dans Electronics Letters, Vol. 36, N°7, pages 665-666, le 30 Mars 2000. La méthode d'égalisation proposée n'opère plus porteuse à porteuse mais symbole MC-CDMA par symbole MC-CDMA, en prenant en compte l'ensemble des porteuses. Elle est appelée pour cette raison égalisation GMMSE (*Global Minimum Mean Square Error*) ou, de manière équivalente, égalisation M-MMSE (*Matrix Minimum Mean Square Error*). Elle a pour but de minimiser l'erreur quadratique moyenne entre les symboles estimés $d_k(i)$ et les symboles transmis $d_k(i)$.

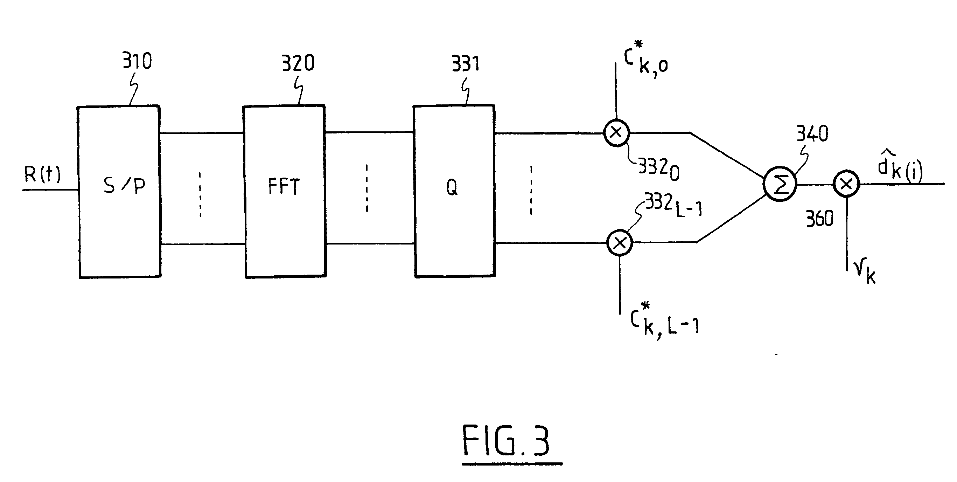

Un récepteur MC-CDMA à égalisation GMMSE pour un utilisateur *k* (encore appelé dans ce cas *per user* MMSE) a été représenté en Fig. 3. Il diffère de celui de la Fig. 2 en ce que l'égalisation est réalisée au moyen d'une multiplication 331 par une matrice **Q** des signaux des différentes porteuses. Le signal désétalé obtenu en sortie du sommateur 340 est ensuite multiplié par le niveau $v_k$ d'émission de l'utilisateur *k* considéré pour fournir un symbole estimé $d_k(i)$.

Comme montré dans l'article précité, la matrice **Q** peut être obtenue en appliquant la théorie du filtrage de Wiener, sous la forme :

$$Q = H^H(AA^H + \sigma_b^2.I_N)^{-1} \tag{3}$$

avec **A=HCV** où **H** est la matrice diagonale NxN représentant la réponse fréquentielle du canal, **C** est la matrice NxN dont les colonnes sont les séquences de code des différents utilisateurs (que nous appellerons simplement par la suite « codes »), **V** est la matrice diagonale NxN dont les éléments $v_i$ sont les niveaux d'émission des différents utilisateurs, $\sigma_b^2$ est la variance du bruit et $I_N$ est la matrice identité de taille NxN. Le symbole .$^H$ désigne le transposé conjugué. Notons qu'en général, on ne procède pas à l'inversion matricielle mais on résout le système d'équations linéaires correspondant.

Comme on vient de le voir, la méthode d'égalisation GMMSE suppose que l'on connaisse la matrice **V**, c'est à dire les niveaux émis des différents utilisateurs. Or, un terminal mobile ne connaît pas les puissances d'émission des signaux transmis par la station de base à destination des différents utilisateurs ni même les codes qui sont effectivement utilisés. Les développements de l'état de la technique supposent généralement que les niveaux d'émission sont connus, ce qui n'est pas le cas en pratique. En outre, la formule (3) nécessite une inversion de matrice de taille N, égale à la longueur de la séquence d'étalement et à la valeur maximale du nombre d'utilisateurs (ou de manière équivalente la résolution d'un système de N équations linéaires). Ainsi, même si le système travaille à faible charge, la complexité de l'opération d'égalisation reste toujours élevée.

Le but de la présente invention est de proposer une méthode d'égalisation GMMSE pour voie descendante d'un système de télécommunication MC-CDMA qui permettent d'estimer les différents niveaux d'émission à destination des différents utilisateurs et qui soit de complexité réduite, notamment lorsque le système ne travaille pas à pleine charge.

A cette fin, la présente invention est définie par une méthode d'égalisation conforme à la revendication 1.

Avantageusement, l'égalisation porteuse par porteuse des symboles MC-CDMA étant suivie d'un filtrage adapté à chacun des N codes possibles, les N valeurs obtenues par filtrage adapté à chacun des N codes possibles sont alors soumis à un calcul de module donnant l'estimation desdits niveaux. Une opération de lissage temporel peut être prévue préalablement ou postérieurement à celle de calcul de module.

Selon une variante, on sélectionnera à partir des N niveaux estimés ($\hat{v}_i$) un sous-ensemble de codes parmi les N codes possibles. La sélection pourra être effectuée en retenant parmi les N niveaux estimés ($\hat{v}_i$) ceux qui excèdent une valeur de seuil $Th$ prédéterminée. Alternativement, pour une liaison $k$ donnée utilisant un code $c_k$ et présentant un niveau d'émission $\hat{v}_k$, on sélectionne les codes $c_m$ associés à des niveaux d'émission $\hat{v}_m$ tels que $\hat{v}_m > \mu . \hat{v}_k$ avec $0 < \mu < 1$. La valeur de seuil $Th$ ou $\mu$ sera avantageusement déterminée en fonction du ratio entre le nombre de codes effectivement utilisés et le nombre N de codes possibles. En outre, pour une liaison $k$ donnée utilisant un code $c_k$, on pourra ne retenir finalement parmi les codes sélectionnés que ceux qui sont les plus brouilleurs de ce dernier. Les codes $c_i$ les plus brouilleurs du code $c_k$ seront avantageusement obtenus à partir d'une propriété de la séquence produit définie par $w_{ik}[l] = c_{li}.c^*_{lk}$ où $c_{li}$ et $c_{lk}$ sont les séquences associées aux codes $c_i$ et $c_k$ respectivement. Si les codes vérifient une relation du type $c_{\ell,i}.c^*_{\ell,k} = \lambda_{ik} c_{\ell,f(i,k)}$ ou $\lambda_{ik} c^*_{\ell,f(i,k)}$ où $\lambda_{ik}$ est un nombre complexe *et f(i,k)* est un indice fonction de *i* et *k,* les codes les plus brouilleurs du code $c_k$ pourront être obtenus à partir des codes les plus brouilleurs d'un code $c_0$ prédéterminé.

Si P codes parmi N ont été sélectionnés comme indiqué plus haut, la matrice $\hat{\mathbf{V}} = \mathbf{Diag}(\hat{v}_0,..,\hat{v}_{N-1})$, où les $\hat{v}_i$ sont les niveaux d'émission estimés par la première étape prévoyant une égalisation porteuse par porteuse de type MRC, pourra être réduite à une matrice **V'** de taille PxP ne comportant plus que des niveaux associés aux dits code sélectionnés, la seconde étape étant alors adaptée à calculer:

$$\hat{D}' = (\hat{A}'^H \hat{A}' + \sigma_b^2 . I_P)^{-1} \hat{V}'^H Z'$$

où $\hat{\mathbf{A}}' = \mathbf{HC'}\hat{\mathbf{V}}'$, **H** est la matrice donnant les caractéristiques du canal de transmission aux différentes fréquences porteuses, **C'** est la matrice des P codes sélectionnés, **Z'** représente la sortie du filtrage adapté de la première étape, réduite aux P codes sélectionnés, $\sigma_b^2$ est la variance du bruit sur chaque porteuse et $\mathbf{I}_P$ la matrice unité de taille PxP. La matrice $\hat{\mathbf{A}}'^H \hat{\mathbf{A}}'$ pourra être obtenue à partir du produit matriciel $\mathbf{C'^H|H|^2C'}$ ou du produit matriciel $\mathbf{(C^H|H|^2C)'}$ où $\mathbf{(C^H|H|^2C)'}$ est une version réduite aux codes sélectionnés de la matrice $\mathbf{C^H|H|^2C}$, le choix de la première ou de la seconde méthode de calcul dépendant du nombre de codes sélectionnés. Si la matrice **C** des codes est telle que $c^*_{k,i} c_{k,j} = \lambda_{ij} c_{k,f(i,j)}$ ou $\lambda_{ij} c^*_{k,f(i,j)}$ où $\lambda_{ij}$ est un nombre complexe, où *f(i,j)* est un indice compris entre 0 et N-1 dépendant de *i* et *j*, la matrice $\mathbf{C^H|H|^2C}$ pourra être obtenue en calculant d'abord une première ligne/colonne de ladite matrice et en déduisant les autres à partir de ladite première ligne/colonne au moyen d'une permutation de ses éléments. Si la matrice **C** est une matrice de Hadamard ou de Hadamard tournée, on calculera ladite première ligne de $\mathbf{C^H|H|^2C}$ grâce à une transformée de Hadamard. De même, si la matrice **C** est une matrice de Fourier ou de Fourier tournée, on calculera la première ligne de $\mathbf{C^H|H|^2C}$ grâce à une transformée de Fourier. La matrice $\hat{\mathbf{A}}'^H \hat{\mathbf{A}}'$ sera obtenue à partir du produit matriciel $\mathbf{C'^H|H|^2C'}$ si le nombre de codes sélectionnés est inférieur à $\log_2(N)$ et à partir du produit matriciel $\mathbf{(C^H|H|^2C)'}$ sinon.

L'invention est également définie par un récepteur de système de télécommunication de type MC-CDMA, comprenant des moyens pour mettre en oeuvre la méthode d'égalisation telle qu'exposée ci-dessus.

L'invention concerne enfin un récepteur pour système de télécommunication de type MC-CDMA, comprenant un tel dispositif d'égalisation.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente de manière schématique la structure d'un émetteur MC-CDMA connu de l'état de la technique ;
La Fig. 2 représente de manière schématique la structure d'un récepteur MC-CDMA mono-utilisateur connu de l'état de la technique;
La Fig. 3 représente de manière schématique la structure d'un récepteur MC-CDMA utilisant une égalisation GMMSE, connu de l'état de la technique;
La Fig. 4 représente de manière schématique un estimateur de niveaux d'émission utile au dispositif d'égalisation selon l'invention ;
La Fig. 5 représente de manière schématique la structure d'un récepteur MC-CDMA utilisant une égalisation GMMSE selon un premier mode de réalisation de l'invention ;

La Fig. 6 représente de manière schématique la structure d'un récepteur MC-CDMA utilisant une égalisation GMMSE selon un second mode de réalisation de l'invention.

Nous nous plaçons à nouveau dans le contexte d'un système MC-CDMA utilisant une méthode d'égalisation GMMSE. Le signal MC-CDMA après l'étape de FFT (c'est-à-dire le signal en sortie du module 320 de la Fig. 3) peut s'écrire sous la forme d'un vecteur **Y** de dimension N dont les composantes correspondent aux différentes porteuses. En reprenant les notations ci-dessus (mais en omettant, par souci de simplification, l'indice temporel $i$), on peut exprimer **Y** en fonction du vecteur **D** des symboles $d_k$ transmis à destination des différents utilisateurs :

$$Y=HCVD+b=AD+b \tag{4}$$

où **A=HCV** et où **b** est le vecteur des composantes de bruit.

Plus précisément, **D=** $(d_0, ..., d_{N-1})^T$ représente le vecteur des symboles émis à destination des différents utilisateurs. La matrice diagonale **V=Diag**$(v_0, ..., v_{N-1})$ représente les niveaux émis. La matrice **C** correspond aux séquences de code émises. La $i^{ème}$ colonne de **C** correspond à la $i^{ème}$ séquence de code. Par exemple, cette matrice peut être une matrice de Walsh-Hadamard ou de Fourier, pour laquelle un algorithme de transformée rapide existe. La matrice diagonale **H** représente la réponse fréquentielle du canal aux différentes fréquences sous-porteuses, soit **H=Diag** $(h_0, h_1, ..., h_{N-1})$. On supposera par la suite que cette matrice est connue. Des techniques existent pour l'estimation de la matrice de réponse fréquentielle, par exemple s'appuyant sur l'insertion de pilotes de référence, comme décrit dans la demande française n°0011834 déposée le 14.9.00 au nom de la demanderesse et incluse ici par référence.

Lorsque le système n'est pas à pleine charge, c'est à dire lorsque le système ne comporte qu'un nombre P<N d'utilisateurs, on peut réduire la taille des vecteurs et matrices intervenant dans l'équation (4). En effet, on peut supposer, sans perte de généralité, que ces **P** utilisateurs sont les P premiers : 0,..,P-1. On en conclut que $d_i = 0$ pour $i$ >P-1. Soit **D'** le vecteur réduit aux données non nulles : **D' =** $(d_0, ..., d_{P-1})^T$. De même les niveaux $v_i$ sont nuls pour $i$ > P-1. De même, on peut définir une matrice réduite **V' =Diag** $(v_0, ..., v_{P-1})$.

Si les P codes utilisés des utilisateurs sont connus, la matrice **C** peut aussi être réduite à une matrice **C'** de taille NxP ne comportant que les codes utilisés. Dans ce cas, la matrice A, produit des matrices **H,C** et **V** se réduit également à une matrice **A'** de taille NxP : **A'=HC'V'**. Le vecteur **Y** s'écrit alors : **Y=A'D'+b.**

A la réception le vecteur **Y** fait l'objet de l'égalisation GMMSE par la matrice **Q** donnée par (3). Si $\hat{D}$ est le vecteur des symboles estimés pour les différents utilisateurs, obtenus par désétalement :

$$\hat{D} =V^H C^H QY=A^H(AA^H+\sigma_b^2.I_N)^{-1}Y \tag{5}$$

On peut montrer (voir annexe) que l'expression (5) est équivalente à :

$$\hat{D} = (A^H A+\sigma_b^2.I_N)^{-1} A^H Y \tag{6}$$

Lorsque le système n'est pas en pleine charge les équations (5) et (6) se réduisent respectivement à :

$$\hat{D'}=A'^H(A'A'^H+\sigma_b^2.I_N)^{-1} Y \tag{5'}$$

$$\hat{D'}=(A'^H A'+\sigma_b^2.I_P)^{-1} A'^H Y \tag{6'}$$

On notera que l'équation (6') fait intervenir la matrice **A'^H A'** de taille réduite PxP alors que l'équation (5') fait intervenir la matrice **A'A'^H** de taille NxN.

L'idée à la base de l'invention est d'estimer dans une étape préliminaire les niveaux d'émission grâce à une méthode de détection mono-utilisateur et ensuite d'utiliser ces niveaux pour l'égalisation GMMSE .

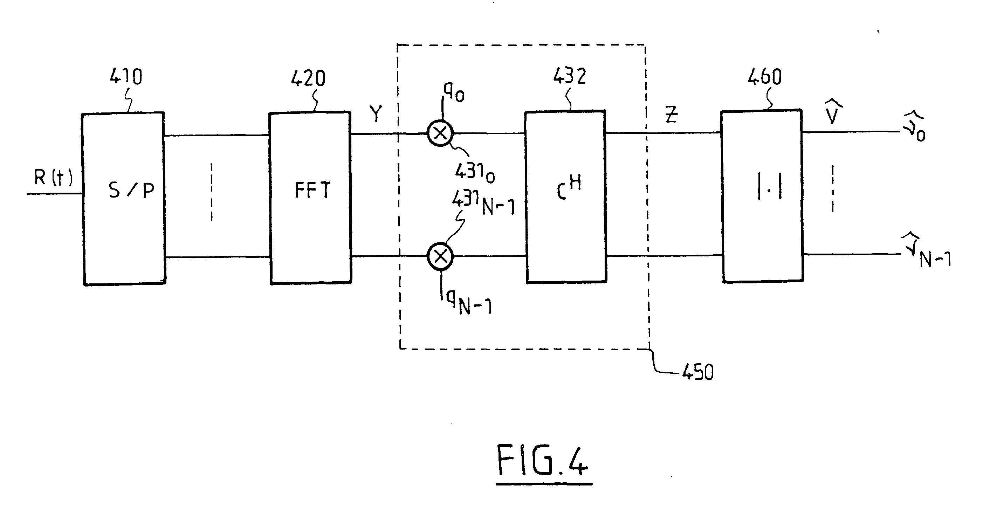

La détection mono-utilisateur telle qu'exposée plus haut en relation avec la Fig. 2 permet d'obtenir une première approximation du niveau d'émission relatif de chaque utilisateur en négligeant l'interférence entre utilisateurs. Pour ce faire on applique, en sortie du module de FFT, comme indiqué en Fig. 4, une égalisation porteuse à porteuse grâce aux multiplieurs $431_0,.., 431_{N-1}$, puis on désétale en 432 les signaux au moyen des séquences des différents utilisateurs, pour un obtenir un vecteur de symboles $\mathbf{Z}=(z_0,..,z_{N-1})^T$, soit :

$$Z=C^H QY \tag{7}$$

où $\mathbf{Q=Diag}(q_0,..,q_{N-1})$ où les $q_i$ sont des coefficients de la méthode d'égalisation choisie MRC, EGC, ZF, MMSE. On a représenté par 450 la combinaison du module d'égalisation et du module de désétalement. L'opération effectuée en 450 est donc une multiplication par la matrice $\mathbf{C^H Q}$ et sa sortie est le vecteur $\mathbf{Z}$.

On note que si la méthode d'égalisation retenue est la méthode MRC, l'expression (7) s'écrit encore :

$$Z=C^H H^H Y \tag{8}$$

On obtient une estimation des niveaux relatifs d'émission dans le module 460 sous la forme d'un vecteur $\hat{\mathbf{v}}=(\hat{v}_0,..,\hat{v}_{N-1})^T$ tel que :

$$\widehat{v}_i=\sqrt{|z_i|^2}=|z_i| \tag{9}$$

si l'on néglige l'interférence et le bruit, et

$$\widehat{v}_i=\sqrt{|z_i|^2-\widehat{\widetilde{\lambda}}^2} \tag{10}$$

si l'on dispose d'une estimation $\hat{\lambda}^2$ de la puissance de l'interférence et du bruit.

Avantageusement, si plusieurs symboles MC-CDMA ont été émis avec les mêmes codes et les mêmes puissances (par exemple au sein d'une même trame de symboles), le module 460 peut effectuer un lissage des valeurs $\widehat{v}_i$ ou $\widehat{v}_i^2$ par un filtre FIR ou IIR. Dans ce dernier cas, aucune latence supplémentaire n'est introduit par le lissage. Si l'on note $\widetilde{v}_i(n)$ la sortie du filtre à l'instant $n$ :

$$\widetilde{v}_i(n)=\alpha\widetilde{v}_i(n-1)+\beta\widehat{v}_i(n) \tag{11}$$

et où $\alpha$ et $\beta$ sont les coefficients du filtre. On prendra par exemple $\alpha = 0.9$ et $\beta = 1-\alpha$.

Dans tous les cas, une fois les niveaux relatifs d'émission évalués, on peut estimer la matrice $\mathbf{A}$ par :

$$\hat{A}=HC\hat{V} \text{ et donc } \hat{A}^H=\hat{V}^H C^H H^H \tag{12}$$

où $\hat{\mathbf{V}}=\mathbf{Diag}(\hat{v}_0,..,\hat{v}_{N-1})$.

Il suffit alors de remplacer dans (5) ou (6) A et $\mathbf{A^H}$ par leurs estimées respectives pour obtenir $\hat{\mathbf{D}}$.

Avantageusement, on effectuera la détection au moyen de la formule (6) et on utilisera la méthode d'égalisation MRC donnée par (8) dans l'étape préliminaire de détection mono-utilisateur. Ainsi, le résultat de l'égalisation porteuse par porteuse pourra être réutilisé dans l'égalisation GMMSE. En effet, l'équation (6) peut s'écrire :

$$\hat{D}= (\hat{A}^H\hat{A}+\sigma_b^2.I_N)^{-1}\hat{A}^H Y=(\hat{A}^H\hat{A}+\sigma_b^2.I_N)^{-1}\hat{V}^H C^H H^H Y=(\hat{A}^H\hat{A}+\sigma_b^2.I_N)^{-1}\hat{V}^H Z \tag{13}$$

La variance du bruit $\sigma_b^2$ peut être évaluée quant à elle, de manière classique, grâce à des signaux pilotes servant à l'estimation du canal de transmission. Il est également possible d'utiliser une valeur moyenne « typique ».

La matrice $\mathbf{\hat{A}^H\hat{A}}$ peut encore se réécrire sous la forme:

$$\hat{A}^H\hat{A}=\hat{V}^H(C^H H^H HC)\hat{V}=\hat{V}^H(C^H|H|^2C)\hat{V} \tag{14}$$

Nous allons montrer que, pour la plupart des codes couramment utilisés, le calcul de la matrice $\mathbf{B}=\mathbf{C}^H|\mathbf{H}|^2\mathbf{C}$ peut être considérablement simplifié.

Supposons tout d'abord que le code utilisé est un code de Walsh-Hadamard (WH). On rappelle que le code WH peut être généré comme les colonnes d'une matrice $\mathbf{C}_{2p}$ obtenue par récurrence :

$$\mathbf{C}_{2p}=\begin{bmatrix} \mathbf{C}_p & \mathbf{C}_p \\ \mathbf{C}_p & -\mathbf{C}_p \end{bmatrix} \text{ et } \mathbf{C}_1=[1] \tag{15}$$

La matrice est réelle, symétrique, et égale à sa propre inverse. De plus, les séquences sont orthogonales.

Les éléments de $\mathbf{C}$ peuvent s'exprimer sous la forme : $c_{ij}=(-1)^{\langle ij\rangle}$ où $<i, j>$ est le produit scalaire des représentations binaires de $i$ et $j$ :

$$\langle i,j\rangle=\sum_k i_k j_k$$

On en déduit la propriété suivante :

$$c_{ki}^* c_{kj}=c_{k,i\oplus j} \tag{16}$$

où $i\oplus j$ représente l'addition bit à bit des entiers $i$ et $j$.

En effet :

$$\sum_n i_n k_n + \sum_n j_n k_n = \sum_n (i_n+j_n)k_n = \sum_n (i\oplus j)_n k_n \text{ et donc } \langle k,i\rangle + \langle k,j\rangle = \langle k,i\oplus j\rangle.$$

Il résulte de (16) que le produit conjugué de deux codes WH est encore un code WH.

Supposons maintenant que les codes utilisés soient des codes de Fourier, définis par : $c_{i,k} = \exp(-j\,2\pi\,ik/N)$. La matrice du code est symétrique.

$$c_{k,i}^* c_{k,j} = c_{k,j-i} \tag{17}$$

où "$j$-$i$" désigne ici la soustraction modulo N.

Il en résulte là aussi que le produit conjugué de deux codes de Fourier est encore un code de Fourier.

Cette propriété peut être généralisée à une famille de codes obtenus par « rotation » des codes précédents (et pour cette raison appelés codes tournés) tels que présentés dans l'article de A. Bury et al. intitulé « Diversity comparison of spreading transforms for multi-carrier spread spectrum transmission methods » publié dans Electronic Wireless 2000 Proceedings, Dresden Germany. La matrice d'un code tourné est définie par :

$$C^r=C.D(r) \tag{18}$$

où $\mathbf{D}$ est une matrice diagonale définie par le vecteur $\mathbf{r}=(r_0,..,r_{N-1})^T$ soit $\mathbf{D}=\mathbf{Diag}(r_0,..,r_{N-1})$ où $r_i=\exp(j\varphi_i)$.

On peut montrer que si la matrice $\mathbf{C}$ du code initial est telle que le produit conjugué de deux codes est encore un code ou son conjugué alors la matrice $\mathbf{C}^r$ du code tourné possède la même propriété, à un facteur multiplicatif près.

De manière générale, on considérera les codes vérifiant la propriété suivante :

$$c_{k,i}^* c_{k,j}=\lambda_{ij}.c_{k,f(i,j)} \text{ ou } \lambda_{ij}.c_{k,f(i,j)}^* \text{ que l'on notera } \lambda_{ij}.c_{k,f(i,j)}^{(*)} \tag{19}$$

où $f(i,j)$ est un indice dépendant de $i$ et $j$ et décrivant 0 à N-1 à $i$ constant ou à $j$ constant et où $\lambda_{ij}$ est un nombre complexe dépendant en général des indices $i$ et $j$.

Dans ce cas les coefficients $b_{ij}$ de la matrice $\mathbf{B=C^H|H|^2C}$ peuvent s'exprimer par :

$$b_{ij}=\sum_{k=0}^{N-1}|h_k|^2 c_{k,i}^* c_{k,j}=\lambda_{ij}\sum_{k=0}^{N-1}|h_k|^2 c_{k,f(i,j)}^{(*)} \qquad (20)$$

On calcule tout d'abord, par exemple, la première ligne de la matrice $\mathbf{B}$, c'est-à-dire les coefficients $b_{0j}$, puis on en déduit les autres lignes par permutation :

$$b_{ij}=\frac{\lambda_{ij}}{\lambda_{o,j}}b_{0,f_0^{-1}(f(i,j))}^{(*)} \text{ où } f_0(k)=f(0,k) \qquad (21)$$

Si l'on dispose d'une table de $f_0^{-1}f$, et, le cas échéant de $\frac{\lambda_{ij}}{\lambda_{0,j}}$, le calcul de la matrice $\mathbf{B}$ ne nécessite que le calcul d'une seule de ses lignes.

De manière générale, si le code employé vérifie la propriété (19), notamment pour un code de Hadamard, Hadamard tourné, Fourier ou Fourier tourné, on calculera une ligne de la matrice $\mathbf{B}$ (ou une colonne puisqu'elle est hermitienne) et on en déduira les autres lignes (respectivement, les autre colonnes) au moyen d'opérations de permutation et de multiplication.

Selon un mode de réalisation avantageux de l'invention, on ne prend en compte dans le calcul de (5), (6), (13) ou (14) que les codes effectivement utilisés (c'est-à-dire pour les utilisateurs présents) et, parmi ceux-ci, pour un utilisateur donné, seulement ceux interférant significativement avec le code de cet utilisateur.

Considérons un utilisateur $k$. La formule (9) ou (10) donne l'estimation des niveaux d'émission $\hat{v}=(\hat{v}_1,..,\hat{v}_{N-1})$.

La détermination des codes les plus interférents peut se faire selon l'un des critères suivants :

(1) on sélectionne les P-1 (P entier donné tel que P<N) codes $c_m$ distincts de $c_k$ associés aux niveaux $\hat{v}_m$ les plus élevés ;

(2) on sélectionne les codes $c_m$ distincts de $c_k$ associés aux niveaux $\hat{v}_m>Th$ où $Th$ est un seuil prédéterminé. Avantageusement, le seuil $Th$ sera adaptatif et dépendra du niveau d'émission pour l'utilisateur considéré. On sélectionnera les codes $c_m$ tels que : $v_m>\mu.v_k$ avec, par exemple, $0<\mu<1$. Si le récepteur de l'utilisateur $k$ utilise plusieurs codes d'indices $k_1,..,k_\Delta$, c'est-à-dire si l'utilisateur a établi plusieurs liaisons avec la station de base (le canal d'un utilisateur est alors constitué de plusieurs liaisons), on prendra en compte le code d'indice $k_\delta\in\{k_1,.., k_\Delta\}$ associé au niveau $v_{k\delta}$ le plus faible et l'on sélectionnera les codes $c_m$ tels que : $v_m>\mu.v_{k\delta}$ . Selon une variante, le seuil absolu $Th$ ou relatif $\mu$ peut être choisi en fonction des valeurs de N (longueur des séquences) et P (nombre de codes utilisés), par exemple en fonction du ratio P/N, c'est-à-dire du taux d'utilisation de la ressource, dont dépend l'interférence après démodulation .

Bien entendu une combinaison des critères précédents est également envisageable. En outre, en complément à la sélection à partir des niveaux d'émission, on peut sélectionner parmi ceux retenus selon ce critère, seuls les codes les plus intrinsèquement brouilleurs (c'est-à-dire hormis toute considération de niveau d'émission) pour le code considéré. En effet, on sait, par exemple de l'article de D. Mottier et D. Castelain intitulé 'A spreading sequence allocation procedure for MC-CDMA tansmission systems' publié dans VTC' Fall 2000, Sept. 2000 inclus ici par référence, que, si les coefficients $h_k$ du canal sont corrélés, pour un code d'utilisateur donné, certains codes, à niveau d'émission égal, sont plus brouilleurs que d'autres. Plus précisément, l'interférence entre deux codes $c_i$ et $c_j$ est liée aux propriétés de la séquence « produit » $w_{ij}$, définie par $w_{ij}[k]=c_i[k] c_j^*[k]$. Nous appellerons par la suite ce critère de sélection le critère de brouillage intrinsèque.

A chaque code $c_i$ on associe un ensemble $E_i$ de codes jugés "non critiques" c'est-à-dire faiblement interférents. La taille de ces ensembles dépend du niveau d'interférence accepté. Nous supposerons que chaque ensemble $E_i$ contient M éléments.

Selon un mode de réalisation avantageux, les ensembles $E_i$ sont stockés dans une table bi-dimensionnelle: une première entrée correspond à l'index $i$ du code considéré, une deuxième entrée correspond au rang $k$ ($k$ entre 0 et M-1) du code "non critique". La sortie de la table donne les index $j$ des codes, ce que l'on exprime par :

$$j = tab[i,k] \qquad (22)$$

Dans le cas des séquences de WH, une table à une dimension suffit : on peut ne mémoriser que les séquences associés à la séquence 0. En effet, $w_{ij}[k]=c_{i\oplus j}[k]=w_{0,i\oplus j}$ (la séquence produit correspond à un code), si l'on appelle $\mathscr{P}$ la propriété liée à la séquence produit permettant de distinguer un code intrinsèquement peu brouilleur :

$$E_i=\{j, \text{ tel que } w_{ij}=c_i c_j^{\bullet} \text{ vérifie la propriété } \mathscr{P}\}$$

$$\Rightarrow E_i=\{j, \text{ tel que } w_{0,i\oplus j}=c_0 c_{i\oplus j} \text{ vérifie la propriété } \mathscr{P}\}$$

$$\Rightarrow E_i=\{k\oplus i; w_{0,k}=c_0 c_k^{\bullet} \text{ vérifie la propriété } \mathscr{P}\}$$

$$\Rightarrow E_i=\{k\oplus i; k\in E_0\}=i\oplus E_0$$

On peut donc générer les indices des codes associés de $E_i$ à partir de ceux de $E_0$ par :

$$j=i\oplus tab[0,k] \tag{23}$$

Cette propriété se généralise à tout code vérifiant la propriété (19). La relation (23) devient alors :

$$j=f_i^{-1}(tab[0,f_0(k)]) \text{ où } f_i(j)=f(i,j) \tag{24}$$

Dans le cas où les fonctions $f_i^{-1}$ ont une forme simple, une table à une seule dimension suffit pour générer les ensembles de codes non critiques. En particulier cette propriété s'applique à un code de Hadamard tourné, à un code de Fourier ou à un code de Fourier tourné.

Le critère de brouillage intrinsèque consiste pour un utilisateur $k$ donné à éliminer dans les codes relatifs aux indices appartenant à $E_k$ et à sélectionner les indices restants.

Il faut noter que la sélection selon le critère de brouillage intrinsèque peut intervenir avant ou après la sélection selon le critère de niveau d'émission.

La sélection des codes selon le critère de niveau d'émission en combinaison éventuelle avec le critère de brouillage intrinsèque permet à la fois d'améliorer les performances et de diminuer la complexité, en réduisant la taille des matrices.

Concernant l'amélioration des performances, on notera en effet que les codes non utilisés peuvent correspondre à des estimations $\hat{v}_i$ de valeurs faibles, mais non nulles, qui peuvent perturber le décodage. En revanche, si on élimine un code utilisé dont le niveau émis est faible, les performances n'en seront que très faiblement dégradées.

Concernant la diminution de la taille des matrices, si P codes ont été finalement sélectionnés on peut construire une matrice $\mathbf{V'}$ de taille PxP obtenue à partir de $\mathbf{V'}$ en éliminant les éléments relatifs aux codes non sélectionnés. On peut supposer, sans perte de généralité que ces codes portent les indices 0,..P-1, d'où $\mathbf{\hat{V}'}=\mathbf{Diag}(\hat{v}_0,..,\hat{v}_{P-1})$.

L'estimation des symboles transmis pour les différents utilisateurs se fera alors avantageusement en utilisant les équations réduites (5') ou (6').

Deux cas se présentent selon que l'étape préliminaire d'estimation des niveaux par détection mono-utilisateur a fait appel à une égalisation MRC ou non.

Si l'étape préliminaire n'a pas fait appel à une égalisation MRC on remplace $\mathbf{V}$ par $\mathbf{\hat{V}'}$ dans l'expression des matrices $\mathbf{A}$ et $\mathbf{A^H A}$ ce qui donne des versions réduites $\mathbf{\hat{A}'}$ et $\mathbf{\hat{A}'^H \hat{A}'}$. La matrice réduite $\mathbf{\hat{A}'}$ est simplement obtenue par l'expression $\mathbf{\hat{A}'=HC'\hat{V}'}$ où $\mathbf{C'}$ est la matrice réduite aux P codes sélectionnés. L'estimation des symboles se fait alors par :

$$\hat{D}'=(\hat{A}'^H\hat{A}'+\sigma_b^2.I_P)^{-1}\hat{A}'^H Y \tag{25}$$

Si, en revanche, l'étape préliminaire a utilisé une égalisation MRC, c'est-à-dire si l'on dispose déjà du vecteur $\mathbf{Z=C^H H^H Y}$ tel qu'indiqué en (8), on peut créer un vecteur de taille réduite, $\mathbf{Z'}$ ne comportant que les composantes correspondant aux code sélectionnés, ici les P premières composantes. L'estimation des symboles se fait alors de manière similaire à (13) :

$$\hat{D}'=(\hat{A}'^H\hat{A}'+\sigma_b^2.I_P)^{-1}\hat{V}'^H Z' \tag{26}$$

Dans les deux cas, il est important de noter que l'inversion de la matrice (ou la résolution d'un système linéaire) porte sur une matrice de taille **P** et non sur une matrice de taille **N**.

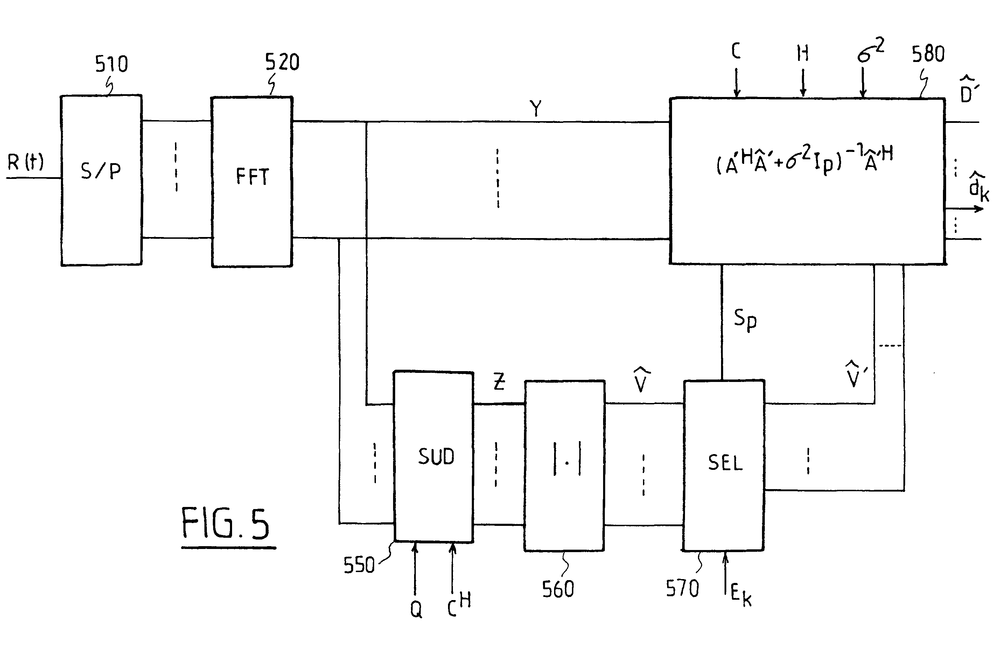

La Fig. 5 représente un dispositif de réception MC-CDMA utilisant la méthode d'égalisation GMMSE selon un premier mode de réalisation de l'invention et implémentant une estimation des symboles selon (25).

On reconnaît les modules 510, 520, 550 et 560 identiques aux modules 410, 420, 450 et 460 de la Fig. 4. Le module 570 effectue une sélection des codes selon le critère de niveau d'émission et/ou de brouillage intrinsèque. L'ensemble Sp des indices des codes sélectionnés est transmis au module de calcul matriciel 580 ainsi que le vecteur $v'=(v_1,...,v_{P-1})$ des niveaux d'émission correspondants. Le module de calcul matriciel 580 reçoit également les valeurs de **C, H,** $\sigma^2$, évalue la matrice **Â'** puis **Â'$^H$Â'** comme on le verra plus loin et enfin effectue le calcul de **D'** selon (25). En pratique, ce calcul sera effectué en résolvant le système de P équations linéaires à P inconnues $d_k$ :

$$(\hat{A}'^H\hat{A}'+\sigma_b^2.I_P)\hat{D}'=\hat{A}'^HY \tag{27}$$

En sortie de 580, seule la valeur $\hat{d}_k$ correspondant au code de l'utilisateur considéré est effectivement utilisée. Si l'utilisateur a établi plusieurs liaisons avec la station de base, l'ensemble des valeurs $d_k$ correspondantes sera retenu.

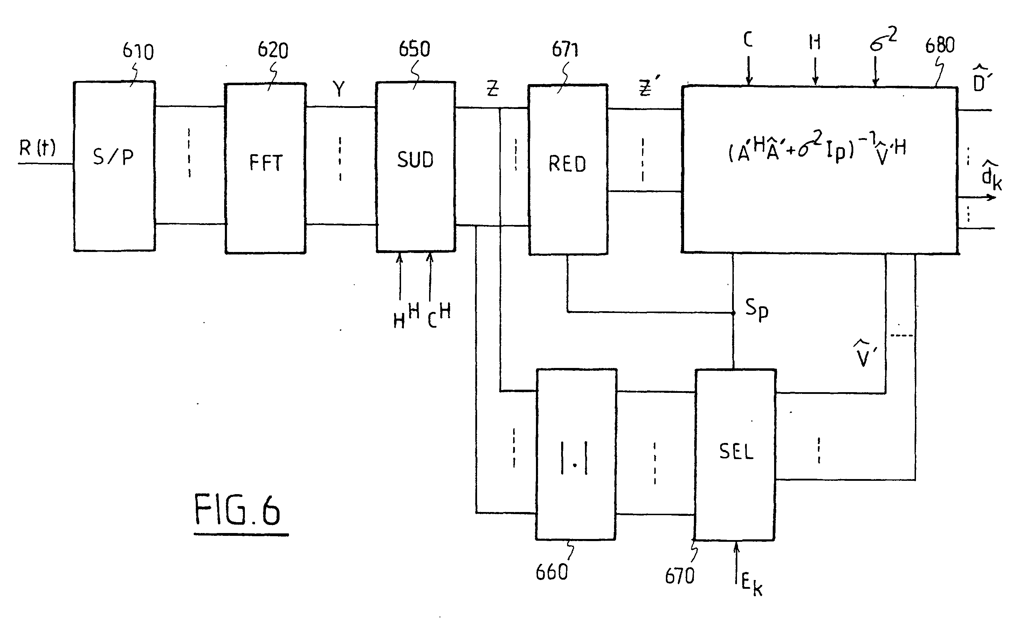

La Fig. 6 représente un dispositif de réception MC-CDMA utilisant la méthode d'égalisation GMMSE selon un second mode de réalisation de l'invention et implémentant une estimation des symboles selon (26). Les modules 610, 620, 650, 660, 670 sont identiques aux modules 510, 520, 550, 560 et 570 de la Fig. 5. A la différence de la Fig. 5, cependant, le module de détection mono-utilisateur 550 est ici situé dans le flux principal de détection. Il effectue une égalisation selon la méthode MRC suivie d'un désétalement, autrement dit une opération de filtrage adapté au canal de transmission et aux codes des différents utilisateurs. L'ensemble S$_P$ des indices sélectionnés est utilisé par le module 671 qui réduit le vecteur **Z** au vecteur **Z'** des composantes correspondant à ces indices. Le module 680 reçoit le vecteur **Z'**, les valeurs de **C, H,** $\sigma^2$, évalue la matrice **Â'** puis **Â'$^H$Â'** comme on le verra plus loin et enfin effectue le calcul de **D'** selon (26). En pratique, ce calcul sera effectué en résolvant le système de P équations linéaires à P inconnues $d_k$ :

$$(\hat{A}'^H\hat{A}'+\sigma_b^2.I_P)\hat{D}'=\hat{V}'^HZ' \tag{28}$$

Comme précédemment, en sortie de 680, on ne retiendra que la valeur ou les valeurs $\hat{d}_k$ relative(s) au(x) code(s) de l'utilisateur.

Notons que dans le dispositif de réception de la Fig. 5 ou celui de la Fig. 6, les composantes du vecteur **D'** peuvent servir à une estimation des niveaux plus fine que celle obtenue à partir de la détection mono-utilisateur. Dans ce cas, le nouveau vecteur des niveaux estimés peut être utilisé pour un nouveau calcul de **D'** ou pour un calcul d'un vecteur de symboles à un instant ultérieur. Pour ce faire, on reboucle la sortie de 580 (resp. 680) sur le module 560 (resp. 660).

En outre, le dispositif d'égalisation selon l'invention peut prévoir de passer de manière dynamique d'une méthode d'égalisation à une autre en fonction des caractéristiques du canal ou du taux d'occupation de la ressource P/N. Par exemple, la méthode EGC sera préférée à la méthode MRC si le taux d'occupation P/N est supérieur à un certain seuil prédéterminé. Le dispositif de réception passe alors de la configuration de la Fig. 6 à celle de la Fig. 5 et réciproquement. Bien entendu, le basculement ne peut intervenir qu'au début d'un cycle de détection, de manière à assurer la cohérence des calculs.

Comme on l'a vu plus haut, les modules 580 et 680 évaluent tout d'abord la matrice **Â'** par **Â'=HC'V'**. Une première expression de **Â'$^H$Â'** s'en déduit:

$$\hat{A}'^H\hat{A}'=\hat{V}'^H(C'^H|H|^2C')\hat{V}' \tag{29}$$

Si l'on observe que **Â'** peut encore s'écrire **Â'=(HC)'V'** où (HC)' est la réduction de la matrice **HC** à ses P premières colonnes. On en déduit une seconde expression de **Â'$^H$Â':**

$$A'^H A'=\hat{V}'^H(C^H H^H)'(HC)'\hat{V}'=\hat{V}'^H(C^H|H|^2C)'\hat{V}' \tag{30}$$

On notera que, selon cette seconde expression, on effectue d'abord de calcul de **C$^H$|H|$^2$C** sur la matrice **C** complète avant de procéder à la réduction de dimension.

Lorsque le nombre de codes P est faible, on optera pour le calcul de $\hat{A}'^H\hat{A}'$ selon la formule (29). Ce calcul conduit à environ $(NP^2+2P^2+NP)$ opérations.

Si, en revanche, la réduction du nombre de codes n'est pas très importante, on optera pour le calcul selon la formule (30), dès lors qu'il existe un algorithme rapide pour l'application de la transformée **C**. Ce calcul est d'autant plus simple que, dans la plupart des cas, les codes de la matrice **C** vérifient la propriété (19). Les éléments de $B=C^H|H|^2C$ peuvent alors être obtenus par (20) et (21). Comme indiqué plus haut, seul le calcul d'une ligne (ou d'une colonne) est effectué, les autres lignes (ou les autres colonnes) s'en déduisant par permutation des éléments. Si l'on utilise par exemple un code WH, la première ligne de la matrice **B** est obtenue par une transformée de Hadamard du vecteur $\rho=(|h_0|^2,..,|h_{N-1}|^2)^T$ nécessitant $N\log_2(N)$ opérations. Le calcul complet de $\hat{A}'^H\hat{A}'$ requiert $(N\log_2(N)+2P^2)$ opérations. Cette opération sera donc plus efficace dès que $\log_2(N)$ sera plus petit que $P^2$. Les modules 580 et 680 pourront passer de manière dynamique du calcul selon (29) au calcul selon (30) et réciproquement.

Bien que le dispositif de réception MC-CDMA utilisant la méthode d'égalisation selon l'invention ait été représenté sous la forme de modules fonctionnels, il va de soi que tout ou partie de ce dispositif peut être réalisé au moyen d'un processeur unique dédié ou programmé pour remplir l'ensemble des fonctions décrites ou encore sous la forme d'une pluralité de processeurs dédiés ou programmés pour remplir chacun une partie desdites fonctions.

Annexe :

Soit **Y=AD+b** un observable à partir duquel on peut estimer le vecteur **D** par filtrage de Wiener. **A** est une matrice carrée de taille NxN. Le vecteur **D** des symboles estimés pour les différents utilisateurs, s'obtient par l'équation de Wiener-Hopf:

$$\hat{D}=R_{DY}R_{YY}^{-1}Y=(R_{DD}A^H)(AR_{DD}A^H+\sigma_b^2.I_N)^{-1}Y$$

où $R_{DY}$, $R_{YY}$, $R_{DD}$ sont respectivement la matrice de covariance de **Y** et **D** et les matrices d'autocovariance de **Y** et de **D**. Si l'on suppose que les symboles transmis sont décorrélés, on a $R_{DD}=I_N$ et donc :

$$\hat{D}=A^H(AA^H+\sigma_b^2.I_N)^{-1}Y$$

Soit $X=A^HY$, le résultat du filtrage adapté de **Y** : on sait que **X** est un résumé exhaustif de **Y**. On peut prendre comme observable le vecteur **X** au lieu du vecteur **Y** et estimer le vecteur **D** à partir de ce nouvel observable au moyen d'un filtrage de Wiener. Le vecteur estimé **D** s'écrit alors :

$$\hat{D}=R_{DX}R_{XX}^{-1}X$$

Or $R_{DX}=E(DX^H)=E(DY^HA)=(R_{DD}A^H+R_{Db})A=A^HA$ et de même
$R_{XX}=A^HAR_{DD}A^HA+A^HR_{bb}A=(AA^H+\sigma_b^2I_N)A^HA$ d'où

$$\hat{D}=(A^HA+\sigma_b^2I_N)^{-1}X=(A^HA+\sigma_b^2I_N)^{-1}A^HY$$

Si la matrice carrée **A** est remplacée par une matrice rectangulaire **A'** de taille NxP, on obtient de la même façon :

$$\hat{D}=(A'^HA'+\sigma_b^2I_P)^{-1}X=(A'^HA'+\sigma_b^2I_P)^{-1}A'^HY$$

**Revendications**

**1.** Méthode d'égalisation pour voie descendante d'un système de télécommunication MC-CDMA dans laquelle une pluralité de liaisons est établie entre un émetteur et une pluralité de récepteurs, chaque liaison utilisant un code d'accès distinct parmi N codes possibles, méthode comprenant une première étape (450,460) d'estimation des niveaux relatifs ($v_i$) des signaux émis par l'émetteur au moyen de chacun desdits N codes, ladite première étape incluant une égalisation (431) des symboles MC-CDMA porteuse par porteuse suivie d'un filtrage adapté à chacun des N codes possibles (432), et une seconde étape (580,680) utilisant lesdits niveaux pour estimer les symboles transmis par l'émetteur sur au moins une liaison, ladite seconde étape étant adaptée à minimiser l'erreur quadratique moyenne entre lesdits symboles transmis et les symboles estimés, méthode selon laquelle, l'égalisation porteuse par porteuse de la première étape étant une égalisation MRC, la seconde étape est adaptée à calculer :

$$\hat{D} = ((\hat{A}^H \hat{A} + \sigma_b^2 . I_N))^{-1} \hat{V}^H Z$$

où $\hat{D}$ est le vecteur des symboles estimés sur les différentes liaisons, $\mathbf{Z}$ représente la sortie du filtrage adapté de la première étape, $\hat{\mathbf{A}} = \mathbf{HCV}$ avec $\mathbf{H}$ matrice donnant les caractéristiques du canal de transmission aux différentes fréquences porteuses, $\mathbf{C}$ est la matrice des N codes, $\mathbf{D} = \mathbf{Diag}(v_0, .., v_{N-1})$ où les $v_i$ sont les niveaux d'émission estimés par la première étape, $\sigma_b^2$ est la variance du bruit sur chaque porteuse et $\mathbf{I_N}$ la matrice unité de taille NxN, méthode **caractérisée en ce que**, si les composantes de la matrice des codes $\mathbf{C}$ sont telles que $c_{k,i}^* c_{k,j} = \lambda_{ij} c_{k,f(i,j)}$ ou $\lambda_{ij} c_{k,f(i,j)}^*$ où $\lambda_{ij}$ est un nombre complexe et $f(i,j)$ est un indice compris entre 0 et N-1 dépendant de $i$ et $j$, la matrice $\hat{A}^H \hat{A}$ est obtenue à partir de la matrice $\mathbf{B} = \mathbf{C^H |H|^2 C}$ et cette dernière est elle-même obtenue en calculant d'abord une de ses lignes/colonnes et en déduisant les autres lignes/colonnes au moyen d'une permutation de ses éléments.

**2.** Méthode d'égalisation selon la revendication 1, **caractérisée en ce que** les N valeurs obtenues par filtrage adapté à chacun des N codes possibles sont soumis à un calcul de module (460) donnant l'estimation desdits niveaux.

**3.** Méthode d'égalisation selon la revendication 2, **caractérisée en ce qu'**une opération de lissage temporel est prévue préalablement ou postérieurement à celle de calcul de module.

**4.** Méthode d'égalisation selon l'une des revendications 1 à 3, **caractérisée en ce que** l'on sélectionne (570, 670) à partir des N niveaux estimés ($v_i$) un sous-ensemble de codes parmi les N codes possibles.

**5.** Méthode d'égalisation selon la revendication 4, **caractérisée en ce que** la sélection est effectuée en retenant parmi les N niveaux estimés ($v_i$) ceux qui excèdent une valeur de seuil $Th$ prédéterminée.

**6.** Méthode d'égalisation selon la revendication 4, **caractérisée en ce que**, pour une liaison $k$ donnée utilisant un code $c_k$ et présentant un niveau d'émission $v_k$, on sélectionne les codes $c_m$ associés à des niveaux d'émission $v_m$ tels que $v_m > \mu . v_k$ avec $0 < \mu < 1$.

**7.** Méthode d'égalisation selon l'une des revendications 5 ou 6, **caractérisée en ce que** la valeur de seuil $Th$ ou $\mu$ est déterminée en fonction du ratio entre le nombre de codes effectivement utilisés et le nombre N de codes possibles.

**8.** Méthode d'égalisation selon l'une des revendications 4 à 7, **caractérisée en ce que**, pour une liaison $k$ donnée utilisant un code $c_k$, on ne retient finalement parmi les codes sélectionnés que ceux qui sont les plus brouilleurs de ce dernier.

**9.** Méthode d'égalisation selon la revendication 8, **caractérisée en ce que** les codes $c_i$ les plus brouilleurs du code $c_k$ sont obtenus à partir d'une propriété de la séquence produit définie par $w_{ik}[l] = c_{li} . c_{lk}^*$ où $c_{li}$ et $c_{lk}$ sont les séquences associées aux codes $c_i$ et $c_k$ respectivement.

**10.** Méthode d'égalisation selon la revendication 9, **caractérisée en ce que** les codes vérifiant une relation du $c_{\ell,i} . c_{\ell,k}^* = \lambda_{ik} c_{\ell,f(i,k)}$ ou $\lambda_{ik} c_{\ell,f(i,k)}^*$ où $\lambda_{ik}$ est un nombre complexe et $f(i,k)$ est un indice fonction de $i$ et $k$, les codes les plus brouilleurs du code $c_k$ sont obtenus à partir des codes les plus brouilleurs d'un code $c_0$ prédéterminé.

**11.** Méthode d'égalisation selon l'une des revendications 4 à 10, **caractérisée en ce que**, P codes parmi N ayant été sélectionnés, la matrice $\hat{V} = \mathbf{Diag}(v_0, ..., v_{N-1})$, où les $v_i$ sont les niveaux d'émission estimés par la première étape, est réduite à une matrice $\mathbf{V'}$ de taille PxP ne comportant plus que des niveaux associés aux dits code sélectionnés, la seconde étape telle que définie dans la revendication 1 étant remplacée par une seconde étape adaptée à calculer :

$$\hat{D}' = (\hat{A}'^H \hat{A}' + \sigma_b^2 . I_P)^{-1} \hat{V}'^H Z'$$

où $\hat{\mathbf{A}}'\mathbf{=HC'\hat{V}'},$ **H** est la matrice donnant les caractéristiques du canal de transmission aux différentes fréquences porteuses, **C'** est la matrice des P codes sélectionnés, **Z'** représente la sortie du filtrage adapté de la première étape, réduite aux P codes sélectionnés, $\sigma_b^2$ est la variance du bruit sur chaque porteuse et $\mathbf{I_P}$ la matrice unité de taille PxP.

12. Méthode d'égalisation selon la revendication 11, **caractérisée en ce que** la matrice $\hat{\mathbf{A}}'^H\hat{\mathbf{A}}'$ est obtenue à partir du produit matriciel $\mathbf{C'^H|H|^2C'}$ ou du produit matriciel $\mathbf{(C^H|H|^2C)'}$ où $\mathbf{(C^H|H|^2C)'}$ est une version réduite aux codes sélectionnés de la matrice $\mathbf{C^H|H|^2C,}$ le choix de la première ou de la seconde méthode de calcul dépendant du nombre de codes sélectionnés.

13. Méthode d'égalisation selon la revendication 12, **caractérisée en ce que**, si la matrices **C** des codes est telle que $c_{k,i}^*c_{k,j}=\lambda_{ij}c_{k,f(i,j)}$ ou $\lambda_{ij}c_{k,f(i,j)}^*$ où $\lambda_{ij}$ est un nombre complexe, où $f(i,j)$ est un indice compris entre 0 et N-1 dépendant de $i$ et $j$, la matrice $\mathbf{C^H|H|^2C}$ est obtenue en calculant d'abord une première ligne/colonne de ladite matrice et en déduisant les autres à partir de ladite première ligne/colonne au moyen d'une permutation de ses éléments.

14. Méthode d'égalisation selon la revendication 13, **caractérisée en ce que**, la matrice **C** étant une matrice de Hadamard ou de Hadamard tournée, on calcule ladite première ligne de $\mathbf{C^H|H|^2C}$ grâce à une transformée de Hadamard.

15. Méthode d'égalisation selon la revendication 13, **caractérisée en ce que**, la matrice **C** étant une matrice de Fourier ou de Fourier tournée, on calcule ladite première ligne de $\mathbf{C^H|H|^2C}$ grâce à une transformée de Fourier.

16. Méthode d'égalisation selon la revendication 14, **caractérisée en ce que** la matrice $\hat{\mathbf{A}}'^H\hat{\mathbf{A}}'$ est obtenue à partir du produit matriciel $\mathbf{C'^H|H|^2C'}$ si le nombre de codes sélectionnés est inférieur à $\log_2(N)$ et à partir du produit matriciel $\mathbf{(C^H|H|^2C)'}$ sinon.

17. Dispositif d'égalisation pour un récepteur de système de télécommunication de type MC-CDMA, **caractérisé en ce qu'**il comprend des moyens pour mettre en oeuvre la méthode d'égalisation selon l'une des revendications précédentes.

18. Récepteur pour système de télécommunication de type MC-CDMA, **caractérisé en ce qu'**il comprend un dispositif d'égalisation selon la revendication 17.


**Patentansprüche**

1. Ausgleichsverfahren für die Abwärtsstrecke eines MC-CDMA-Telekommunikationssystems, in dem mehrere Verbindungen zwischen einem Sender und mehreren Empfängern hergestellt sind, wobei jede Verbindung einen anderen Zugangscode zwischen N möglichen Codes einsetzt, wobei das Verfahren einen ersten Schritt (450, 460) zur Abschätzung der relativen Pegel ($v_i$) der Signale umfasst, die vom Sender mit Hilfe von jedem der N Codes gesendet werden, wobei der erste Schritt einen Ausgleich (431) der MC-CDMA-Symbole Träger für Träger mit nachfolgender Filterung umfasst, die an jeden der möglichen N Codes (432) angepasst ist, und einen zweiten Schritt (580, 680), der die Pegel einsetzt, um die vom Sender übertragenen Symbole über zumindest eine Verbindung abzuschätzen, wobei der zweite Schritt angepasst ist, um den mittleren quadratischen Fehler zwischen den übertragenen Symbolen und den abgeschätzten Symbolen zu minimieren, wobei nach diesem Verfahren der Ausgleich Träger für Träger des ersten Schritts ein MRC-Ausgleich ist, und wobei der zweite Schritt angepasst ist, um folgendes zu berechnen:

$$\hat{D} = (\hat{A}^H\hat{A} + \sigma_b^2 \cdot I_N)^{-1}\hat{V}^H Z$$

wobei $\hat{D}$ der Vektor der abgeschätzten Symbole auf den verschiedenen Verbindungen ist, Z die Ausgabe der an den ersten Schritt angepassten Filterung darstellt, wobei $\hat{A} = HC\hat{V}$ mit der Matrix H die Merkmale des Übertragungskanals für die verschiedenen Trägerfrequenzen angibt, C die Matrix der N Codes ist, $\hat{V} = Diag(\hat{v}_0,..., \hat{v}_{N-1})$, wobei $\hat{v}_i$ die durch den ersten Schritt abgeschätzten Sendepegel sind, $\sigma_b^2$ die Rauschvarianz an jedem Träger und IN die Einheitsmatrix der Größe NxN ist,

wobei das Verfahren **dadurch gekennzeichnet ist, dass**, wenn die Komponenten der Matrix der Codes C wie $c_{k,ic}^*{}_{k,j} = \lambda_{i,j}c_{k,f(i,j)}$ oder $\lambda_{ij}c_{k,f(i,j)}^*$ sind, wobei $\lambda_{ij}$ eine komplexe Zahl und f(i,j) ein Index zwischen 0 und N-1 abhängig von i und j ist, die Matrix $\hat{A}^H\hat{A}$ anhand der Matrix $B = C^H|H|^2C$ erhalten wird und wobei diese ihrerseits erhalten wird, indem zuerst eine ihrer Zeilen/Spalten berechnet wird und indem die anderen Zeilen/Spalten mit Hilfe einer Vertauschung ihrer Elemente abgeleitet werden.

2. Ausgleichsverfahren nach Anspruch 1, **dadurch gekennzeichnet, dass** die N Werte, die durch die an jeden der N möglichen Codes angepasste Filterung erhalten werden, einer Modulberechnung (460) unterzogen werden, die die Abschätzung der Pegel ergibt.

3. Ausgleichsverfahren nach Anspruch 2, **dadurch gekennzeichnet, dass** vor oder nach der Operation der Modulberechnung eine Zeitglättungsoperation vorgesehen ist.

4. Ausgleichsverfahren nach einem der Ansprüche 1 bis 3, **dadurch gekennzeichnet, dass** man anhand der **N** abgeschätzten Pegel ($\hat{v}_i$) eine Untermenge von Codes unter den N möglichen Codes auswählt (570, 670).

5. Ausgleichsverfahren nach Anspruch **4, dadurch gekennzeichnet, dass** die Auswahl erfolgt, indem zwischen den N abgeschätzten Pegeln ($\hat{v}_i$) diejenigen einbehalten werden, die einen vorbestimmten Schwellwert Th übersteigen.

6. Ausgleichsverfahren nach Anspruch 4, **dadurch gekennzeichnet, dass** für eine gegebene Verbindung k, die einen Code $c_k$ einsetzt und einen Sendepegel $\hat{v}_k$ aufweist, die Codes $c_m$ ausgewählt werden, die zu Sendepegeln $\hat{v}_m$ wie $v_m > \mu \cdot v_k$ mit $0 < \mu < 1$ gehören.

7. Ausgleichsverfahren nach einem der Ansprüche 5 oder 6, **dadurch gekennzeichnet, dass** der Schwellwert Th oder $\mu$ in Abhängigkeit vom Verhältnis zwischen der Anzahl der tatsächlich eingesetzten Codes und der Anzahl N von möglichen Codes bestimmt wird.

8. Ausgleichsverfahren nach einem der Ansprüche 4 bis 7, **dadurch gekennzeichnet, dass** man für eine gegebene Verbindung k, die einen Code $c_k$ einsetzt, letztlich von den ausgewählten Codes nur den letztgenannten einbehält.

9. Ausgleichsverfahren nach Anspruch 8, **dadurch gekennzeichnet, dass** die Codes $c_i$, die die störendsten vom Code $c_k$ sind, anhand einer Eigenschaft von der durch $w_{ik}[l] = c_{li} \cdot c_{ik}^*$ definierten Produktsequenz erhalten werden, wobei $c_{li}$ und $c_{lk}$ die Sequenzen sind, die jeweils den Codes $c_i$ und $c_k$ zugeordnet sind.

10. Ausgleichsverfahren nach Anspruch 9, **dadurch gekennzeichnet, dass** die Codes, die eine Relation von $c_{t,j} \cdot c_{t,k}^* = \lambda_{ik}c_{t,f(i,k)}$ oder $\lambda_{ik}c_{t,f(i,k)}^*$ vergleichen, wobei $\lambda_{ik}$ eine komplexe Zahl ist und f(i,k) ein von i und k abhängiger Index ist, die störendsten Codes vom Code $c_k$ anhand der störendsten Codes eines vorbestimmten Codes $c_0$ erhalten werden.

11. Ausgleichsverfahren nach einem der Ansprüche 4 bis 10, **dadurch gekennzeichnet, dass**, wenn P Codes unter N ausgewählt wurden, die Matrix $V = Diag(\hat{v}_0, ..., \hat{v}_{N-1})$, wobei $\hat{v}_i$ die durch den ersten Schritt abgeschätzten Sendepegel sind, auf eine Matrix $V'$ der Größe PxP reduziert ist, die nur noch Pegel umfasst, die den ausgewählten Codes zugeordnet sind, wobei der zweite Schritt nach Anspruch 1 durch einen zweiten Schritt ersetzt ist, der angepasst ist, folgendes zu berechnen:

$$\hat{D}' = (\hat{A}'^H \hat{A}' + \sigma_b^2 \cdot I_p)^{-1} \hat{V}'^H Z'$$

wobei $\hat{A}' = HC' \hat{V}'$ mit der Matrix H die Merkmale des Übertragungskanals für die verschiedenen Trägerfrequenzen angibt, C' die Matrix der P ausgewählten Codes ist, Z' die Ausgabe der angepassten Filterung des ersten Schritts darstellt, der auf P ausgewählte Codes reduziert ist, $\sigma_b^2$ die Rauschvarianz auf jedem Träger und Ip die Einheitsmatrix der Größe PxP ist.

12. Ausgleichsverfahren nach Anspruch 11, **dadurch gekennzeichnet, dass** die Matrix $\hat{A}'^H \hat{A}'$ anhand des Matrixprodukts $C'^H |H|^2 C'$ oder des Matrixprodukts $(C^H|H|^2C)'$ erhalten wird, wobei $(C^H|H|^2C)'$ eine auf die ausgewählten Codes der Matrix $C^H|H|^2C$ reduzierte Version ist, wobei die Wahl des ersten oder des zweiten Verfahrens von der Zahl der ausgewählten Codes abhängt.

13. Ausgleichsverfahren nach Anspruch 12, **dadurch gekennzeichnet, dass**, wenn die Matrix C der Codes derart ist, dass $c_{k,i}^* c_{k,j} = \lambda_{i,j}c_{k,f(i,j)}$ oder $\lambda_{ij}c_{k,f(i,j)}^*$ sind, wobei $\lambda_{ij}$ eine komplexe Zahl und f(i,j) ein Index zwischen 0 und N-1 abhängig von i und j ist, die Matrix $C^H|H|^2C$ erhalten wird, indem zuerst eine erste Zeile/Spalte von der Matrix berechnet wird und indem die anderen anhand der ersten Zeile/Spalte mit Hilfe einer Vertauschung ihrer Elemente abgeleitet werden.

14. Ausgleichsverfahren nach Anspruch 13, **dadurch gekennzeichnet, dass** man, da die Matrix C eine Hadamard-Matrix oder eine inverse Hadamard-Matrix ist, die erste Zeile von $C^H|H|^2C$ mit Hilfe einer Hadamard-Transformation berechnet.

15. Ausgleichsverfahren nach Anspruch 13, **dadurch gekennzeichnet, dass** man, da die Matrix C eine Fourier-Matrix oder eine inverse Fourier-Matrix ist, die erste Zeile von $C^H|H|^2C$ mit Hilfe einer Fourier-Transformation berechnet.

16. Ausgleichsverfahren nach Anspruch 14, **dadurch gekennzeichnet, dass** die Matrix $\hat{A}'^H\hat{A}'$ anhand des Matrixprodukts $C'^H|H|^2C'$ erhalten wird, wenn die Anzahl der ausgewählten Codes kleiner als $\log_2(N)$ ist, und dass sie ansonsten anhand des Matrixprodukts $(C^H|H|^2C)'$ erhalten wird.

17. Ausgleichsvorrichtung für einen Empfänger für ein Telekommunikationssystem vom Typ MC-CDMA, **dadurch gekennzeichnet, dass** sie Mittel umfasst, um das Ausgleichsverfahren nach einem der vorhergehenden Ansprüche einzusetzen.

18. Empfänger für ein Telekommunikationssystem vom Typ MC-CDMA, **dadurch gekennzeichnet, dass** er eine Ausgleichsvorrichtung nach Anspruch 17 umfasst.

**Claims**

1. Equalisation method for the downlink of an MC-CDMA telecommunication system in which a plurality of links are established between a transmitter and a plurality of receivers, each link using a distinct access code amongst N possible codes, said method comprising a first step (450, 460) of estimating the relative levels ($\hat{v}_i$) of the signals emitted by the transmitter by means of each of the said N codes, the said first step including an equalisation (431) of the MC-CDMA symbols carrier by carrier, followed by a filtering adapted to each of the N possible codes (432), and a second step (580, 680) using the said levels for estimating the symbols transmitted by the transmitter over at least one link, the said second step being adapted to minimise the mean square error between the said transmitted symbols and the estimated symbols, according to which method, the equalisation carrier by carrier of the first step being an MRC equalisation, the second step is adapted to calculate:

$$\hat{D}=((\hat{A}^H\hat{A}+\sigma_b^2\cdot I_N))^{-1}\hat{V}^HZ$$

where $\hat{D}$ is the vector of the estimated symbols on the different links, **Z** represents the output of the adapted filtering of the first step, $\hat{A}$ = **HCV** with matrix **H** giving the characteristics of the transmission channel at the different carrier frequencies, **C** is the matrix of the N codes, **V=Diag**($\hat{v}_0,..,\hat{v}_{N-1}$) where the $\hat{v}_i$ are the transmission levels estimated by the first step, $\sigma_b^2$ is the variance of the noise on each carrier and IN is the unity matrix of size NxN, said method being **characterised in that**, if the components of the matrix of the **C** codes are such that $c_{k,i}^*c_{k,j}=\lambda_{ij}c_{k,f(i,j)}$ or $\lambda_{ij}c_{k,f(i,j)}^*$ where $\lambda_{ij}$ is a complex number and $f(i,j)$ is an index between 0 and N-1 dependent on i and j, the matrix $\hat{A}^H\hat{A}$ is obtained from the matrix $B=C^H|H|^2C$ and the latter is itself obtained by calculating first of all one of its rows/columns and by deducing the other rows/columns by means of a permutation of its elements.

2. Equalisation method according to claim 1, **characterised in that** the N values obtained by filtering adapted to each of the N possible codes are subjected to a modulus calculation (460) giving the estimation of the said levels.

3. Equalisation method according to claim 2, **characterised in that** a time smoothing operation is provided prior to or subsequently to that of the modulus calculation.

4. Equalisation method according to one of claims 1 to 3, **characterised in that** a subset of codes amongst the N possible codes is selected (5 70, 670) from the N estimated levels ($\hat{v}_i$).

5. Equalisation method according to claim 4, **characterised in that** the selection is effected by retaining, amongst the N estimated levels ($\hat{v}_i$), those which exceed a predetermined threshold value *Th*.

6. Equalisation method according to claim 4, **characterised in that**, for a given link $k$ using a code $c_k$ and having a transmission level $\hat{v}_k$, the codes $c_m$ associated with transmission levels $\hat{v}_m$, such as $\hat{v}_m > \mu \, \hat{v}_k$ with $0<\mu<1$, are selected.

7. Equalisation method according to one of claims 5 or 6, **characterised in that** the threshold value $Th$ or $\mu$ is determined according to the ratio between the number of codes actually used and the number N of possible codes.

8. Equalisation method according to one of claims 4 to 7, **characterised in that**, for a given link $k$ using a code $C_k$, finally, amongst the selected codes, only those are retained which have the greatest ability to jam the latter.

9. Equalisation method according to claim 8, **characterised in that** the codes $c_i$ with the greatest ability to jam the code $c_k$ are obtained from a property of the sequence produced defined by $w_{ik}[l]=c_{li} \cdot c_{lk}^{*}$ where $c_{li}$ and $c_{lk}$ are the sequences associated with the codes $c_i$ and $c_k$ respectively.

10. Equalisation method according to claim 9, **characterised in that** the codes verifying a relation $c_{l,i} \cdot c_{lk}^{*} = \lambda_{ik} c_{l,f(i,k)}$ or $\lambda_{ik} c_{l,f(i,k)}^{*}$ where $\lambda_{ik}$ is a complex number and $f(i,k)$ is an index which is a function of $i$ and $k$, the codes which most jam the code $c_k$ are obtained from the codes which most jam a predetermined code $c_0$.

11. Equalisation method according to one of claims 4 to 10, **characterised in that**, P codes amongst N having been selected, the matrix $\hat{V} = \mathbf{Diag}(\hat{v}_0,..,\hat{v}_{N-1})$, where the $\hat{v}_i$ are the transmission levels estimated by the first step, is reduced to a matrix $\mathbf{V'}$ of size PxP, now containing only levels associated with the said selected codes, the second stage then being adapted to calculate:

$$\hat{D}'=(\hat{A}'^{H}\hat{A}'+\sigma_{b}^{2} \cdot I_{P})^{-1}\hat{V}'^{H}Z'$$

where $\mathbf{\hat{A}'=HC'V'}$, **H** is the matrix giving the characteristics of the transmission channel at the different carrier frequencies, **C'** is the matrix of the P codes selected, **Z'** represents the output of the adapted filtering of the first step, reduced to the P codes selected, $\sigma_{b}^{2}$ is the variance of the noise on each carrier and $\mathbf{I_p}$ is the unity matrix of size PxP.

12. Equalisation method according to claim 11, **characterised in that** the matrix $\mathbf{\hat{A}'^{H} \hat{A}'}$ is obtained from the matrix product $\mathbf{C'^{H}|H|^2 C'}$ or from the matrix product $\mathbf{(C^{H}|H|^2 C)'}$ where $\mathbf{(C^{H}|H|^2 C)'}$ is a version reduced to the selected codes of the matrix $\mathbf{C^{H}|H|^2 C}$, the choice of the first or of the second calculation method depending on the number of codes selected.

13. Equalisation method according to claim 12, **characterised in that**, if the matrix **C** of the codes is such that $c_{k,i}^{*} c_{k,j} = \lambda_{ij} c_{kf(i,j)}$ or $\lambda_{ij} c_{k,f(i,j)}^{*}$ where $\lambda_{ij}$ is a complex number, where $f(i,j)$ is an index between 0 and N-1 dependent on $i$ and $j$, the matrix $\mathbf{C^{H}|H|^2 C}$ is obtained by calculating first of all a first row/column of the said matrix and by deducing the others from the said first row/column by means of a permutation of its elements.

14. Equalisation method according to claim 13, **characterised in that**, the matrix C being a Hadamard or rotated Hadamard matrix, the said first row of $\mathbf{C^{H}|H|^2 C}$ is calculated by means of a Hadamard transform.

15. Equalisation method according to claim 13, **characterised in that**, the matrix C being a Fourier or rotated Fourier matrix, the said first row of $\mathbf{C^{H}|H|^2 C}$ is calculated by means of a Fourier transform.

16. Equalisation method according to claim 14, **characterised in that** the matrix $\mathbf{\hat{A}'^{H} \hat{A}'}$ is obtained from the matrix product $\mathbf{C'^{H}|H|^2 C'}$ if the number of codes selected is less than $\log_2(N)$ and from the matrix product $\mathbf{(C^{H}|H|^2 C)'}$ otherwise.

17. Equalisation device for a telecommunication system receiver of the MC-CDMA type, **characterised in that** it comprises means for implementing the equalisation method according to one of the preceding claims.

18. Receiver for a telecommunication system of the MC-CDMA type, **characterised in that** it comprises an equalisation device according to claim 17.

FIG.1

FIG.2

EP 1 244 243 B1

FIG.3

EP 1 244 243 B1

FIG.4

FIG.5

610 620 650 671 C H $\sigma^2$ 680

$R(t)$ | S/P | FFT | Y | SUD | Z | RED | Z' | $(\hat{A}'^H\hat{A}' + \sigma^2 I_p)^{-1}\hat{V}'^H$ | $\hat{D}'$

$\hat{d}_k$

$H^H$ $c^H$

$S_p$

$\hat{V}'$

$|\cdot|$ SEL

660 670 $E_k$

## FIG.6

EP 1 244 243 B1